# EUROPÄISCHE PATENTSCHRIFT

(11) **EP 2 307 922 B1**
(45) Veröffentlichungstag und Bekanntmachung des Hinweises auf die Patenterteilung: **29.07.2020**
(21) Anmeldenummer: 09749483.5
(22) Anmeldetag: 05.05.2009
(51) Int. Cl.: G02B 26/08

(54) **VERFAHREN ZUR KONTROLLE ELEKTROMAGNETISCHER TERAHERTZ-TRÄGERWELLEN**
METHOD FOR CONTROL OF ELECTROMAGNETIC TERAHERTZ CARRIER WAVES
PROCÉDÉ POUR CONTRÔLER DES ONDES PORTEUSES TÉRAHERTZ ÉLECTROMAGNÉTIQUES

(30) Priorität: 23.05.2008 DE 102008024795
(43) Veröffentlichungstag der Anmeldung: 13.04.2011
(73) Patentinhaber: Deutsche Telekom AG, 53113 Bonn (DE)
(72) Erfinder: EINSIEDLER, Hans, Joachim, 13189 Berlin (DE); KADEL, Gerhard, 64293 Darmstadt (DE); KRAUS, Josef, 64807 Dieburg (DE); MILCZEWSKY, Klaus, 64342 Seeheim-Jugenheim (DE); NEUMANN, Michael, 10777 Berlin (DE); BUSE, Karsten, 53115 Bonn (DE); BREUNIG, Ingo, 53123 Bonn (DE); SOWADE, Rosita, 53123 Bonn (DE); KIESSLING, Jens, 53123 Bonn (DE); KNABE, Bastian, 53115 Bonn (DE); MICHAELS, Ralph, 51427 Bergisch Gladbach (DE)
(74) Vertreter: Braun-Dullaeus, Karl-Ulrich
(86) Internationale Anmeldenummer: PCT/DE2009/000639
(87) Internationale Veröffentlichungsnummer: WO 2009/140941

(56) Entgegenhaltungen:
- EP-A1- 2 283 593
- EP-A2- 1 798 570
- WO-A2-2006/023195
- WO-A2-2006/023195
- US-A1- 2005 024 359
- US-A1- 2006 017 999
- US-A1- 2008 197 286

## Beschreibung

Die Erfindung betrifft ein Verfahren zur Beeinflussung, insbesondere zur Ablenkung und/oder zur Fokussierung, elektromagnetischer Strahlung im Frequenzbereich zwischen 0.1 und 10 Terahertz. Die Erfindung betrifft auch eine Vorrichtung zur Umsetzung des Verfahrens.

Seit vor etwa 100 Jahren erste Techniken zur drahtlose Datenübertragung eingesetzt wurden, stieg die zur Verfügung stehende Bandbreite kontinuierlich an. Um dem weiter steigenden Bedarf gerecht werden zu können, werden in Zukunft Wellen im Terahertzbereich als Träger besonders hoher Trägerfrequenz genutzt, um mit diesen Wellen Datenübertragungsraten von 10 Gbit/s und mehr zu erreichen.

Solche Terahertzwellen können mittels ultraschneller elektronischer Schaltungen oder mittels optischer Verfahren generiert werden. Da die elektronischen Verfahren allerdings aufgrund der Lebensdauer freier Elektronen und Löcher in ihrer Geschwindigkeit begrenzt sind, arbeiten diese Verfahren oberhalb Frequenzen von 100 GHz, wenn überhaupt, nur noch ineffizient. Die bekannten optischen Verfahren zur Erzeugung von Terahertzwellen bedienen sich hingegen meist höherer Frequenzen, die dann durch Frequenzmischung reduziert werden. So sind mittlerweile Verfahren bekannt, mit denen durch Differenzfrequenzbildung zweier Lichtwellen im infraroten, sichtbaren oder ultravioletten Spektralbereich Terahertzwellen mit hoher Effizienz generiert werden.

Derzeit ist es jedoch noch verhältnismäßig aufwendig, die Terahertzwellen in ihrer Ausbreitung zu kontrollieren. Die für die Kontrolle notwendigen Spiegel und Linsen

sind von großer Komplexität und nur mit entsprechend hohem Kostenaufwand bereit zu stellen, wenn sie elektronisch ansteuerbar sein sollen.

Die WO 2006/023195 A2 betrifft Metamaterialien, die aus einer Vielzahl von einzelnen Zellen geformt sind. Zumindest Teile davon haben eine unterschiedliche sind von grosser Komplexität und nur mit entsprechend hohem Kostenaufwand bereit zu stellen, wenn sie elektronisch ansteuerbar sein sollen.

Die WO 2006/023195 A2 betrifft Metamaterialien, die aus einer Vielzahl von einzelnen Zellen geformt sind. Zumindest Teile davon haben eine unterschiedliche Durchlässigkeit als andere. Die Vielzahl von individuellen Zellen sind angeordnet um ein Metamaterial bereitzustellen, das einen Gradienten entlag zumindest einer Achse aufweist.

Aufgabe der Erfindung ist es, ein Verfahren zu schaffen, mit dem sich die Ausbreitung von Terahertzwellen in einem drahtlosen Kommunikationssystem auf einfache und kostengünstige Weise kontrollieren lässt. Zudem ist es Aufgabe der Erfindung, ein System zur Umsetzung des Verfahrens zu schaffen.

Diese Aufgaben werden durch das Verfahren mit den Merkmalen des Anspruchs 1 und die Vorrichtung nach Anspruch 5 gelöst. Vorteilhafte Ausgestaltungen der Erfindung sind in den jeweiligen Unteransprüchen genannt.

Der wesentliche Grundgedanke der Erfindung liegt im Prinzip darin, das Konzept der digitalen Holographie drahtlose Kommunikationssysteme, die Trägerwellen im Terahertzbereich verwenden, anzuwenden. Dazu wird ein flächiger Modulator eingesetzt, der zumindest auf seiner Oberfläche eine Anordnung einer Vielzahl einzelner aktiver Flächenelemente aufweist. Eine solche Anordnung sollte mindestens eine Matrix von 10 x 10 Flächenelementen und insbesondere sogar mehr als 100 x 100 Flächenelemente aufweisen. Dabei bedeutet "aktiv", dass sich mit diesen Flächenelementen die elektromagnetische Strahlung im Frequenzbereich zwischen 0.1 und 10 Terahertz gezielt beeinflussen lässt, wobei die Beeinflussung im Wesentlichen auf Beugungseffekten beruht, also eine lokale Veränderung der Amplitude und/oder der Phase der Terahertzwelle bedeutet.

Die Matrix der einzeln einstellbaren Flächenelemente bildet quasi ein Hologramm, mit dem durch Beugung der einfallenden Welle beliebige Wellenfronten durch Amplituden und/oder Phasenmodulation erzeugt werden können. Da das Amplituden oder Phasenmuster, an dem die Beugung stattfindet, also das Hologramm, nicht photographisch sondern mit Hilfe elektronisch gesteuerter Verfahren digital erzeugt wird, entspricht die erfindungsgemäße Vorgehensweise der "digitalen Holographie", bei der im Gegensatz zur photografischen Holographie veränderliche Hologramme erzeugt werden können.

Um die gewünschten Beugungseffekte erzielen zu können, müssen die Flächenelemente eine der Wellenlänge der Strahlung entsprechende Größe aufweisen. Insbesondere sollten sie kleiner als etwa ein Viertel der Wellenlänge der zu beeinflussenden Terahertzwelle sein. Aus dieser Anforderung ergibt sich, dass die Flächenelemente einen Durchmesser in der Größenordnung zwischen etwa 5 µm und 100 µm haben sollten. Eine bevorzugte Größenordnung liegt bei etwa 10 µm. Zudem liegt ein erfindungswesentlicher Gedanke darin, dass sich die einzelnen Flächenelemente in ihrer die Strahlung beeinflussenden Eigenschaft durch eine individuelle Ansteuerung vermittels eines entsprechenden Steuergerätes verändern lassen. Durch diese Ansteuerung sollten die Flächenelemente zumindest auf einen von mindestens zwei oder auch aus einem ganzen Spektrum verschiedener Zustände einstellbar sein. Dabei geschieht die Ansteuerung vorteilhafterweise elektronisch.

Die Beugungseffekte können auf zwei grundsätzlich verschiedene Arten hervorgerufen werden: So kann zum einen die Strahlung durch die Flächenelemente des Modulators hindurchtreten ("Transmissionsgeometrie"). Die Zustände der Flächenelemente können dann insbesondere durch Änderungen im Brechungsindex und/oder der Transparenz verursacht werden. Je nach dem, welches Muster der Flächenelemente auf dem Modulator erzeugt wird, können Beugungsmaxima unterschiedlicher flächiger und räumlicher Ausdehnung und Richtung erzeugt werden.

Zum anderen kann die Strahlung an den einzelnen Flächenelementen des Modulators reflektiert werden ("Reflexionsgeometrie"). Auch bei dieser Anordnung kann die einfallende Welle wieder in der Phase und/oder Amplitude moduliert werden. Zur Phasenmodulation kann beispielsweise die Position der lokalen Spiegel vor- oder zurückgefahren werden, so dass der optische Weg sich ändert. Zur Amplitudenmodulation können die Spiegel auch einfach weggeklappt werden.

Wenn ein Spiegel "nach hinten" geschoben wird, dann verlängert sich durch diese mikroskopische Höhenmodulation der Weg von der einfallenden zur reflektierten Welle. Dadurch wird die Phase der Welle verändert. Die einfallende Welle findet je nach Ort auf dem Hologramm eine unterschiedliche "Tiefe" (Wegstrecke) vor. Das führt zu einer Phasenmodulation, dadurch zu Beugung und schließlich zur Erzeugung des holographischen Bildes.

Mit der erfindungsgemäßen Art der Modulation lassen die Form und die Ausbreitungsrichtung der Terahertzwellen komfortabel kontrollieren. So erschließt sich für die Terahertzwellen eine Vielzahl neuer Anwendungen insbesondere in der drahtlosen Telekommunikation über kleine Distanzen mit großen Übertragungsbandbreiten von mehr als 1 Gbit/s oder auch beim Durchleuchten von Gegenständen zur Qualitäts- und Sicherheitskontrolle.

Ein weiterer wesentlicher Gedanke der Erfindung liegt in der technischen Umsetzung des Verfahrens. Erfindungsgemäß werden dabei als Lichtmodulatoren Komponenten, insbesondere herkömmliche Displays, verwendet, die an sich für andere Applikationen eingesetzt werden. Besonders vorteilhaft lassen sich Pixel-Flüssigkristallmodulatoren und Matrix-Mikrospiegelanordnungen ("Spiegel-Arrays", sogenannte "MEMS" - "Micro-Electro-Mechanical Systems") einsetzen. Schließlich reflektieren Metalle nicht nur sichtbares Licht besonders gut, sondern auch die hier zur Debatte stehenden Terahertzwellen. Auch lassen sich Displays einsetzen, die anstelle mit großflächigen Elektroden, die die Terahertzwellen vollständig absorbieren würden, mit kleinen Drähten die einzelnen Flächenelemente ansteuern.

Diese Lichtmodulatoren sind für die digitale Holographie im Frequenzbereich zwischen 0.1 und 10 THz besonders gut einsetzbar, da sie typische Pixelgrößen von 10 µm x 10 µm aufweisen und damit Beugung der Strahlung mit Wellenlängen zwischen 30 µm und 3000 µm hervorrufen. Eine Terahertzwelle, die durch ein Display mit derartigen Charakteristika hindurchtritt oder von einem solchen Display reflektiert wird, unterliegt der Beugung. Da die beugende Struktur auf dem Display durch individuelle Ansteuerung der Pixel eingestellt werden kann, lässt sich die Strahlung in einen beliebigen Winkelbereich lenken respektive fokussieren.

Die Erfindung ist aus Sendern und Empfängern mit Mitteln ausgestattet, mit denen die optimale Richtung der abgestrahlten Terahertzwelle respektive die optimale Umlenkung einer einfallenden Terahertzwelle bestimmt werden kann. Solche Mittel können beispielsweise mit einer einfachen Funkübertragung kommunizieren und sich gegenseitig über die jeweilige relative Positionen informieren.

Zudem kann ein Sensor zur Messung der Orientierung eines mobilen Geräts eingesetzt werden, dessen Display als Modulator eingesetzt werden soll. Wenn feststeht, wie das Terahertzlicht, sei es bei der Emission oder beim Empfang, optimal zu formen ist, so kann unter Zugriff auf eine "Bibliothek" enthaltend Standard-Muster, die beispielsweise Gitter oder Fresnel-Linsen realisieren, ein geeignetes Modulationsmuster ausgesucht und mittels der Ansteuerung auf das Display oder auf einen Teil des Displays aufgeprägt werden.

In einer anderen Anwendung in der Telekommunikation kann ein Sender mit einem erfindungsgemäßen digitalen holographischen Modulator ausgestattet werden und durch Erzeugung verschiedener Gitter den Strahl gezielt zu einem oder zu mehreren Empfängern schicken und auch gegebenenfalls bei bewegtem Empfänger die Richtung nachführen. In der Sicherheitstechnik kann mit solch einem digitalen holographischen Modulator eine Terahertzwelle über ein zu untersuchendes Objekt gerastert werden, oder, wenn besonders kleine Objekte zu untersuchen sind, auch darauf fokussiert werden. Dazu werden auf dem digitalen Modulator Muster dargestellt, die aus der Optik als "Fresnel-Linsen" bekannt sind. In einer weiteren Applikation kann auch durch kleinskalige Zufallsmuster eine breite Streuung einer Terahertzwelle erzeugt werden, wenn ein großer Raumwinkelbereich mit Terhahertzlicht versorgt werden soll.

Die Erfindung wird nachfolgend anhand der Figuren 1 bis 3 erläutert. Die Figuren zeigen:
- **Figur 1**: das Schema eines Hologramms in Transmissionsgeometrie,
- **Figur 2**: das Schema eines Hologramms in Reflexionsgeometrie und
- **Figur 3**: ein Display als Hologramm.

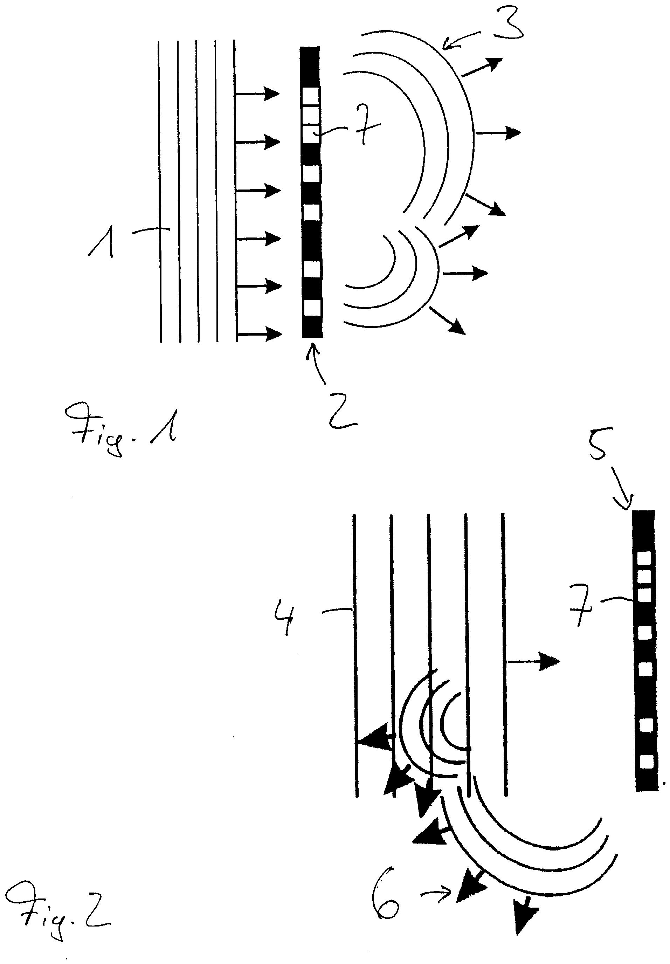

Nach Figur 1 trifft die Front einer einfallenden Terahertzwelle 1 auf einen als Hologramm ausgebildeten räumlichen Modulator 2. Der Modulator weist eine Matrix von mindestens 10 x 10 einzelnen aktiven Flächenelementen 7 auf, wobei jedes Flächenelement einen Durchmesser von etwa 10 µm hat. Jedes Flächenelement wird von eihem nicht dargestellten zentralen Steuergerät angesteuert und nimmt entsprechend der Ansteuerung einen von mindestens zwei Zuständen ein.

An dem Modulator 2 wird die Terahertzwelle 1 gebeugt und in die neue Terahertzwelle 3 überführt. In diesem Fall handelt es sich um eine Beugung des Terahertzlichts in Transmission. Dabei wird unterschieden einerseits zwischen Amplituden- und Phasenmodulatoren und andererseits zwischen "dünnen" und "dicken" Modulatoren, wobei "dicke" Modulatoren das Licht nur dann beugen, wenn die Bragg-Bedingung erfüllt ist. Modulatoren sind in diesem Sinne dick, wenn ihre Dicke deutlich größer als die Wellenlänge der Terahertzstrahlung ist.

Nach Figur 2 geschieht die Beugung einer einfallenden Terahertzwelle 4 in Reflexion am Modulator 5. Die reflektierte Welle 6 breitet sich entsprechend in entgegengesetzter Richtung aus.

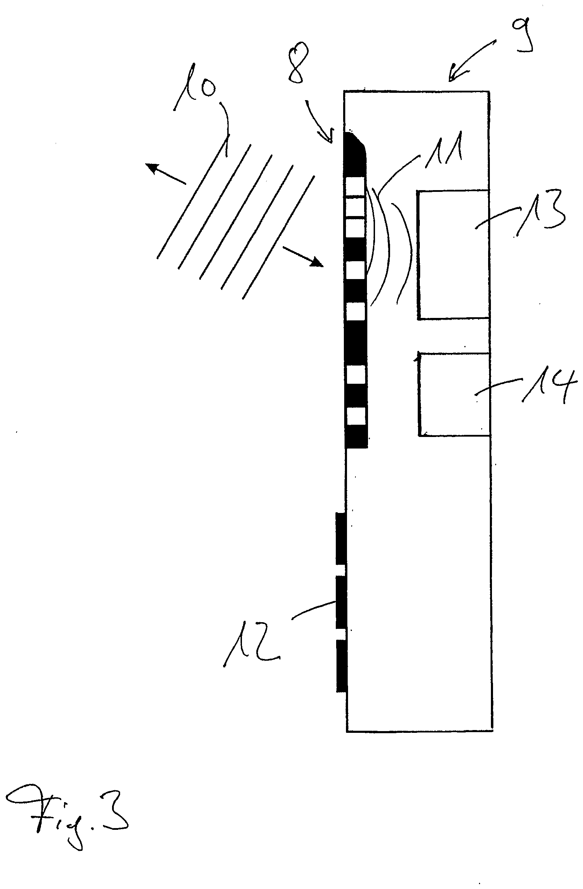

Eine bevorzugte Ausführungsform zeigt Abbildung 3, bei der das Display 8 eines Mobiltelefons 9 als Modulator genutzt wird. Auf diesem kann einerseits - wie üblich - Information angezeigt werden. Zusätzlich kann aber ein Teil des Displays 8 oder das ganze Display 8 genutzt werden, um die einfallende Terahertzwelle 10 durch Beugung in Transmissionsgeometrie zur Welle 11 zu formen, die auf einen Detektor 13 fokussiert wird. Dazu wird auf dem Display 8 ein entsprechendes Muster dargestellt, um den gewünschten fokussierenden Effekt zu erzeugen. In diesem Fall bildet das Display als digitales Hologramm das THz-Signal mit kleiner Fokuslänge auf den Detektor innerhalb des Geräts ab. So kann mit dem Mobiltelefon ein THz-Signal aufgenommen und verarbeitet werden. Die Elektronik des Mobiltelefons zur Ansteuerung des Displays bildet das zentrale Steuergerät, welches das entsprechende Muster auf dem Display 8 erzeugt. Das Mobiltelefon weist entsprechende Tasten 12 auf. Mit der Schaltung der von den Pixeln gebildeten Flächenelemente des Displays wird ein einstellbares Hologramm für die Teraherzstrahlung erzeugt.

Zudem kann in dem Mobiltelefon 9 ein Sender 14 für Terahertzwellen vorgesehen werden. Mit diesem kann eine Terahertzwelle erzeugt und durch die gezielte Beugung am Display 8 ausgesendet werden. Die im Mobiltelefon 9 erzeugte Punktquelle (Kugelwelle) wird mit Hilfe des digitalen Hologramms zu einer ebenen Welle (Richtwelle), die in Richtung der Empfangsstation läuft.

Eine solche Vorrichtung kann genutzt werden, um über kurze Distanzen Daten mit großer Bandbreite zu übertragen. Das ermöglicht gerichtete Funkverbindungen mit Terahertzlicht, welche zu größeren Reichweiten als bei isotroper Abstrahlung führen. Außerdem kann mit dem so ausgestatteten Mobiltelefon ein Terahertzstrahl über Objekte gerastert oder auf einzelne Stellen eines Objekts fokussiert werden.

## Patentansprüche

1. Verfahren zur gerichteten Übertragung von elektromagnetischer Strahlung (1,4,10) im Frequenzbereich zwischen 0.1 und 10 Terahertz in Form eines Terahertzstrahls in einem drahtlosen Kommunikationssystem von einem Sender auf einen Empfänger, wobei der Terahertzstrahl auf den Empfänger gerichtet wird und dynamisch nachgeführt wird,
**dadurch gekennzeichnet,**
**dass** die Sender und Empfänger mit Mitteln ausgestattet werden, mit denen die optimale Richtung der abgestrahlten Terahertzwelle respektive die optimale Umlenkung einer einfallenden Terahertzwelle bestimmt werden kann, wobei die Mittel mittels einer Funkübertragung kommunizieren und sich gegenseitig über die jeweilige relative Position informieren,
**dass** die Strahlung von einem flächigen Modulator (2,5,8) von dem Sender auf den Empfänger gerichtet und dynamisch nachgeführt wird,
wobei der Modulator eine Matrix von mindestens 10 x 10 einzelnen aktiven Flächenelementen (7) aufweist,
wobei jedes Flächenelement (7) einen Durchmesser größer 5 µm und kleiner 100 µm, insbesondere von etwa 10 µm, aufweist,
wobei jedes Flächenelement (7) einzeln von einem zentralen Steuergerät angesteuert wird und entsprechend der Ansteuerung einen von mindestens zwei Zuständen einnimmt,
wobei die Strahlung (1,4,10) durch die Flächenelemente (7) des Modulators (2,5,8) hindurchtritt, wobei der Brechungsindex und/oder die Transmission der Flächenelemente (7) elektronisch angesteuert werden,
oder wobei die Strahlung (1,4,10) an den Flächenelementen (7) des Modulators (2,5,8) reflektiert wird, wobei die Position und/oder die Reflektivität der Flächenelemente (7) angesteuert werden.

2. Verfahren nach Anspruch 1,
**dadurch gekennzeichnet,**
**dass** mit der Schaltung der Flächenelemente (7) des Modulators (2,5,8) ein einstellbares Hologramm für die Teraherzstrahlung erzeugt wird.

3. Verfahren nach Anspruch 1 oder 2,
**dadurch gekennzeichnet,**
**dass** mit dem Modulator (2,5,8) ein Terahertzstrahl (1,4,10) über Objekte gerastert oder auf einzelne Stellen eines Objekts fokussiert wird.

4. Verfahren nach einem der vorherigen Ansprüche,
**dadurch gekennzeichnet,**
**dass** Standard-Muster, wie insbesondere Gitter oder Fresnel-Linsen, aus einer "Bibliothek" geeigneter Modulationsmuster ausgesucht und auf den Modulator (2,5,8), insbesondere auf ein Display oder auf einen Teil eines Displays, aufgeprägt werden.

5. Vorrichtung zur Durchführung des Verfahrens nach einem der vorherigen Ansprüche
**gekennzeichnet durch**
Mittel die an dem Sender und an dem Detektor vorgesehen sind, wobei die Mittel ausgebildet sind die optimale Richtung der abgestrahlten Terahertzwelle respektive die optimale Umlenkung einer einfallenden Terahertzwelle zu bestimmen und sich gegenseitig über die jeweilige relative Position über Funkübertragung zu informieren,
einen flächigen Modulator (2,5,8) mit einer Matrix von mindestens 10 x 10 einzelnen aktiven Flächenelementen (7), wobei jedes Flächenelement (7) einen Durchmesser größer 5 µm und kleiner 100 µm, insbesondere von etwa 10 µm, aufweist, und ein zentrales Steuergerät zur individuellen Ansteuerung der einzelnen Flächenelemente (7), wobei jedes Flächenelement (7) **durch** entsprechende Ansteuerung unterschiedliche Zustände einnimmt.

6. Vorrichtung nach Anspruch 5,
**dadurch gekennzeichnet,**
**dass** jedes Flächenelement (7) zwischen mindestens zwei definierten Zuständen hin- und herschaltbar ist.

7. Vorrichtung nach Anspruch 5 oder 6,
**dadurch gekennzeichnet,**
**dass** der aus Flächenelementen (7) bestehende Modulator (2,5,8) ein Spiegel-Array ist.

## Claims

1. A method for the directed transmission of electromagnetic radiation (1, 4, 10) in the frequency range between 0.1 and 10 terahertz in the form of a terahertz beam in a wireless communication system from a transmitter to a receiver, wherein the terahertz beam is directed toward the receiver and is dynamically tracked,
**characterised**
**in that** the transmitter and receiver are provided with means by which the optimal direction of the radiated terahertz wave, respectively the optimal deflection of an incident terahertz wave, may be determined, wherein the means communicate by means of radio transmission and provide information to one another about the respective relative position,
**in that** the radiation is directed by a planar modulator (2, 5, 8) from the transmitter to the receiver and dynamically tracked,
wherein the modulator has a matrix of at least 10 x 10 individual active planar elements (7),
wherein each planar element (7) has a diameter of greater than 5 µm and less than 100 µm, in particular of approximately 10 µm,
wherein each planar element (7) is individually controlled by a central control device and adopts one of at least two states in accordance with the control,
wherein the radiation (1, 4, 10) passes through the planar elements (7) of the modulator (2, 5, 8), wherein the refractive index and/or the transmission of the planar elements (7) are electronically controlled,
or wherein the radiation (1, 4, 10) is reflected on the planar elements (7) of the modulator (2, 5, 8), wherein the position and/or the reflectivity of the planar elements (7) are controlled.

2. The method according to Claim 1,
**characterised**
**in that** an adjustable hologram for the terahertz radiation is generated by switching the planar elements (7) of the modulator (2, 5, 8).

3. The method according to Claim 1 or 2,
**characterised**
**in that** by means of the modulator (2, 5, 8) a terahertz beam (1, 4, 10) is scanned over objects or focused onto individual locations of an object.

4. The method according to one of the preceding claims,
**characterised**
**in that** standard patterns, such as in particular gratings or Fresnel lenses, are selected from a "library" of suitable modulation patterns and impressed onto the modulator (2, 5, 8), in particular onto a display or onto a part of a display.

5. A device for performing the method according to one of the preceding claims,
**characterised by**
means which are provided on the transmitter and on the detector, wherein the means are configured to determine the optimal direction of the radiated terahertz wave, respectively the optimal deflection of an incident terahertz wave, and to provide information to one another about the respective relative position via radio transmission,
a planar modulator (2, 5, 8) having a matrix of at least 10 x 10 individual active planar elements (7), wherein each planar element (7) has a diameter of greater than 5 µm and less than 100 µm, in particular of approximately 10 µm, and a central control device for the individual control of the individual planar elements (7), wherein each planar element (7) adopts different states by corresponding control.

6. The device according to Claim 5,
**characterised**
**in that** each planar element (7) is switchable to and fro between at least two defined states.

7. The device according to Claim 5 or 6,
**characterised**
**in that** the modulator (2, 5, 8) consisting of planar elements (7) is a mirror array.

## Revendications

1. Procédé, destiné à la transmission dirigée d'un rayonnement électromagnétique (1, 4, 10) dans la gamme de fréquences comprise entre 0,1 et 10 térahertz, sous la forme d'un rayon térahertzien dans un système de communication sans fil, d'un émetteur vers un récepteur, lors duquel on dirige le rayon térahertzien vers le récepteur et on le fait poursuivre de manière dynamique,
**caractérisé**
**en ce qu'**on équipe l'émetteur et le récepteur avec des moyens avec lesquels il est possible de déterminer la direction optimale de l'onde térahertzienne émise, respectivement le renvoi optimal d'une onde térahertzienne incidente, les moyens communiquant via une transmission radio et s'informant réciproquement au sujet de la position relative respective,
**en ce que** le rayonnement est dirigé par un modulateur (2, 5, 8) plan de l'émetteur vers le récepteur et poursuivi de manière dynamique,
le modulateur comportant une matrice d'au moins 10 x 10 éléments plans (7) actifs individuels,
chaque élément plan (7) présentant un diamètre supérieur à 5 µm et inférieur à 100 µm, notamment d'approximativement 10 µm,
chaque élément plan (7) étant activé individuellement par un instrument de commande centralisé et adoptant en fonction de l'activation l'un parmi au moins deux états,
le rayonnement (1, 4, 10) pénétrant à travers les éléments plans (7) du modulateur (2, 5, 8), l'indice de réfraction et/ou la transmission des éléments plans (7) étant activés par voie électronique,
ou le rayonnement (1, 4, 10) se réfléchissant sur les éléments plans (7) du modulateur (2, 5, 8), la position et/ou le pouvoir de réflexion des éléments plans (7) étant activés.

2. Procédé selon la revendication 1,
**caractérisé**
**en ce que** la commutation des éléments plans (7) du modulateur (2, 5, 8) génère un hologramme réglable pour le rayonnement térahertzien.

3. Procédé selon la revendication 1 ou 2,
**caractérisé**
**en ce qu'**avec le modulateur (2, 5, 8), un rayon térahertzien (1, 4, 10) est balayé en trame sur des objets ou est focalisé sur des endroits individuels d'un objet.

4. Procédé selon l'une quelconque des revendications précédentes,
**caractérisé**
**en ce que** le motif standard, comme notamment des grilles ou des lentilles de Fresnel sont choisies dans une « bibliothèque" » de motifs de modulation et sont imprimés sur le modulateur (2, 5, 8), notamment sur un afficheur ou sur une partie d'un afficheur.

5. Dispositif, destiné à réaliser le procédé selon l'une quelconque des revendications précédentes,
**caractérisé par**
des moyens qui sont prévus sur l'émetteur et sur le détecteur, les moyens étant conçus pour déterminer la direction optimale de l'onde térahertzienne émise, respectivement le renvoi optimal d'une onde térahertzienne incidente et pour s'informer réciproquement via une transmission radio au sujet de la position relative respective,
un modulateur (2, 5, 8) plan pourvu d'une matrice d'au moins 10 x 10 éléments plans (7) actifs individuels, chaque élément plan (7) présentant un diamètre supérieur à 5 µm et inférieur à 100 µm, notamment d'approximativement 10 µm, et un instrument de commande centralisé, pour l'activation individuelle des éléments plans (7) individuels, chaque élément plan (7) adoptant par activation correspondante différents états.

6. Dispositif selon la revendication 5,
**caractérisé**
**en ce que** chaque élément plan (7) est commutable en va et vient entre au moins deux états définis.

7. Dispositif selon la revendication 5 ou 6,
**caractérisé**
**en ce que** le modulateur (2, 5, 8) constitué d'éléments plans (7) est un réseau de miroirs.
